# FASCICULE DE BREVET EUROPEEN

(11) **EP 3 964 391 B1**
(45) Date de publication et mention de la délivrance du brevet: **03.04.2024**
(21) Numéro de dépôt: 21194227.1
(22) Date de dépôt: 01.09.2021
(51) Int. Cl.: B60P 1/64

(54) **BRAS DE LEVAGE COMPRENANT UN DISPOSITIF DE POSITIONNEMENT DU CROCHET**
HUBARM, DER EINE VORRICHTUNG ZUR POSITIONIERUNG DES HAKENS UMFASST
LIFTING ARM COMPRISING A DEVICE FOR POSITIONING THE HOOK

(30) Priorité: 02.09.2020 FR 2008915
(43) Date de publication de la demande: 09.03.2022
(73) Titulaire: Guima Palfinger S.A.S., 82300 Caussade (FR)
(72) Inventeur: GRANEL, Thomas, 82800 NÈGREPELISSE (FR); RAUCOULES, Michel, 82440 REALVILLE (FR)
(74) Mandataire: Regimbeau

(56) Documents cités:
- DE-U1- 7 900 608
- FR-A1- 2 627 441
- US-A1- 2013 294 874

## Description

### DOMAINE DE L'INVENTION

L'invention concerne un bras de levage destiné à équiper un véhicule de transport pour le transport de conteneurs mobiles.

### ETAT DE LA TECHNIQUE

Certains véhicules de transport sont équipés d'un bras de levage permettant notamment de charger et de décharger des conteneurs mobiles tels que des bennes, des caisses ou des citernes.

Le bras de levage est un bras articulé fixé sur le châssis du véhicule. Le bras de levage comprend généralement une potence munie à son extrémité d'un crochet qui est propre à être inséré dans un anneau du conteneur mobile afin de pouvoir charger le conteneur mobile sur le véhicule ou le décharger du véhicule.

Cependant, il existe actuellement différents types de conteneurs. En effet, en fonction des pays et des normes en vigueur, les conteneurs mobiles peuvent présenter différentes dimensions et les anneaux peuvent donc être positionnés à différentes hauteurs.

Afin de pouvoir charger et décharger différents types de conteneurs, il existe des bras de levage dont le crochet est monté coulissant par rapport à la potence. De cette manière, il est possible de modifier la position du crochet par rapport à la potence pour adapter le bras de levage à la hauteur de l'anneau du conteneur. Un dispositif de verrouillage, comprenant par exemple des orifices et des goupilles, permet de verrouiller le crochet en position sur la potence une fois que la position du crochet a été ajustée. Des véhicules équipés d'un tel bras de levage sont connus par ex. de US 2013/294874 A1, FR 2 627 441 A1 ou DE 79 00 608 U1.

Cependant, l'ajustement de la position du crochet par rapport à la potence est une opération difficile. En effet, une fois que l'opérateur a déverrouillé le crochet, le crochet n'est plus attaché à la potence et il peut coulisser librement par rapport à la potence. Ainsi, lors de l'ajustement de la position du crochet, l'opérateur doit simultanément porter le crochet pour le maintenir dans la position désirée, et introduire les goupilles dans les orifices afin de verrouiller le crochet sur la potence. Or le crochet présente un poids important, typiquement de l'ordre de 35 kilogrammes, ce qui rend cette opération particulièrement difficile pour un opérateur seul.

De plus, lors du déverrouillage du crochet, il existe un risque que le crochet tombe. Afin de limiter les accidents, il est possible de munir le bras de levage d'une chaine de sécurité reliant le crochet à la potence, de manière à ce que le crochet reste toujours attaché à la potence, même après que le crochet a été déverrouillé.

Cependant, cette solution, si elle empêche le crochet de tomber, ne permet pas de rendre l'ajustement de la position du crochet plus facile. L'opérateur doit toujours porter le crochet pour le maintenir dans la position désirée pendant qu'il installe le dispositif de verrouillage.

### RESUME DE L'INVENTION

Un but de l'invention est de proposer une solution permettant de faciliter l'ajustement de la position du crochet par rapport à la potence.

Ce but est atteint dans le cadre de la présente invention, grâce à un bras de levage comprenant :
- une potence,
- un crochet propre à être engagé dans un anneau d'un conteneur, le crochet étant monté coulissant par rapport à la potence,
- un dispositif de positionnement comprenant une fente et un coulisseau, la fente étant ménagée dans l'un du crochet et de la potence, et le coulisseau étant propre à être fixé sur l'autre du crochet et de la potence de sorte que le coulisseau coulisse dans la fente lorsque le crochet coulisse par rapport à la potence,

dans lequel la fente présente une première extrémité et une deuxième extrémité, le coulisseau étant propre à venir en butée sélectivement contre la première extrémité de la fente de sorte à empêcher un coulissement du crochet par rapport à la potence dans un premier sens de coulissement au-delà d'une première position prédéfinie par rapport à la potence, et contre la deuxième extrémité de la fente de sorte à empêcher un coulissement du crochet par rapport à la potence dans un deuxième sens de coulissement au-delà d'une deuxième position prédéfinie par rapport à la potence,
et dans lequel l'un du crochet et de la potence présente un premier orifice de fixation et l'autre du crochet et de la potence présente un deuxième orifice de fixation et un troisième orifice de fixation, le premier orifice de fixation, le deuxième orifice de fixation et le troisième orifice de fixation étant agencés de sorte que :
   - lorsque le crochet est dans la première position prédéfinie, le premier orifice de fixation se trouve en regard du deuxième orifice de fixation, autorisant l'insertion d'une goupille de fixation à travers le premier orifice de fixation et le deuxième orifice de fixation pour bloquer le crochet dans la première position, et
   - lorsque le crochet est dans la deuxième position prédéfinie, le premier orifice de fixation se trouve en regard du troisième orifice de fixation, autorisant l'insertion de la goupille de fixation à travers le premier orifice de fixation et le troisième orifice de fixation, pour bloquer le crochet dans la deuxième position.

Grâce au dispositif de positionnement, il est possible de faire coulisser le crochet par rapport à la potence jusqu'à ce que le coulisseau vienne en butée contre la première extrémité de la fente ou contre la deuxième extrémité de la fente, de manière à positionner le crochet soit dans la première position prédéfinie, soit dans la deuxième position prédéfinie.

Le coulissement du crochet par rapport à la potence dans un sens ou dans l'autre peut être obtenu sous l'effet de la gravité, simplement en orientant le bras de levage, avec le crochet vers le haut ou vers le bas.

Une fois que le coulisseau est en butée contre l'une ou l'autre des extrémités de la fente, le crochet se trouve dans la position désirée et il suffit alors à l'opérateur de verrouiller le crochet à la potence. Le dispositif de positionnement permet de maintenir le crochet pendant le verrouillage. L'opérateur n'a donc pas besoin de porter le crochet pendant cette opération.

Le bras de levage peut en outre présenter les caractéristiques suivantes :
- le dispositif de positionnement comprend une autre fente ménagée dans l'un du crochet et de la potence, et le coulisseau est propre à être fixé sur l'autre du crochet et de la potence, de sorte que le coulisseau coulisse dans l'autre fente lorsque le crochet coulisse par rapport à la potence, et dans lequel l'autre fente présente une première extrémité et une deuxième extrémité, le coulisseau étant propre à venir en butée sélectivement contre la première extrémité de l'autre fente de sorte à empêcher un coulissement du crochet par rapport à la potence dans le premier sens de coulissement au-delà d'une troisième position prédéfinie du crochet par rapport à la potence, ou contre la deuxième extrémité de l'autre fente de sorte à empêcher un coulissement du crochet par rapport à la potence dans le deuxième sens de coulissement au-delà d'une quatrième position prédéfinie du crochet par rapport à la potence ;
- la troisième position prédéfinie est différente de la première position prédéfinie et/ou la quatrième position prédéfinie est différente de la deuxième position prédéfinie ;
- le coulisseau comprend une pièce en forme d'équerre comprenant une première portion propre à être fixée au moyen d'une vis de fixation sur l'un du crochet et de la potence, et une deuxième portion s'étendant à travers l'une ou l'autre des fentes lorsque la première portion est fixée sur l'un du crochet et de la potence ;
- l'un du crochet et de la potence présente un quatrième orifice de fixation, le quatrième orifice de fixation étant agencé de sorte que lorsque le crochet est dans la troisième position prédéfinie, le premier orifice de fixation, le deuxième orifice de fixation ou le troisième orifice de fixation se trouve en regard du quatrième orifice de fixation, autorisant l'insertion d'une goupille de fixation à travers le premier orifice de fixation, le deuxième orifice de fixation ou le troisième orifice de fixation et le quatrième orifice de fixation, pour bloquer le crochet dans la troisième position.

L'invention concerne en outre un véhicule comprenant un châssis et un bras de levage fixé au châssis, tel que défini précédemment.

### PRESENTATION DES DESSINS

D'autres caractéristiques et avantages ressortiront encore de la description qui suit, laquelle est purement illustrative et non limitative, et doit être lue en regard des dessins annexés, parmi lesquels :
- la figure 1 représente de manière schématique, un véhicule comprenant un bras de levage, en configuration de chargement,
- la figure 2 représente de manière schématique, le véhicule comprenant le bras de levage en configuration de bennage,
- la figure 3 représente de manière schématique une partie d'extrémité d'un bras de levage conforme à un mode de réalisation de l'invention,
- la figure 4 est une vue de détail du dispositif de verrouillage,
- la figure 5 représente de manière schématique, en vue éclatée, la partie d'extrémité du bras de levage de la figure 3,
- la figure 6 est une vue de détail du dispositif de positionnement,
- la figure 7 représente de manière schématique, le bras de levage lorsque le crochet se trouve dans une première position par rapport à la potence,
- la figure 8 représente de manière schématique, le bras de levage lorsque le crochet se trouve dans une deuxième position par rapport à la potence,
- la figure 9 représente de manière schématique, le bras de levage lorsque le crochet se trouve dans une troisième position par rapport à la potence.

### DESCRIPTION DETAILLEE D'UN MODE DE REALISATION

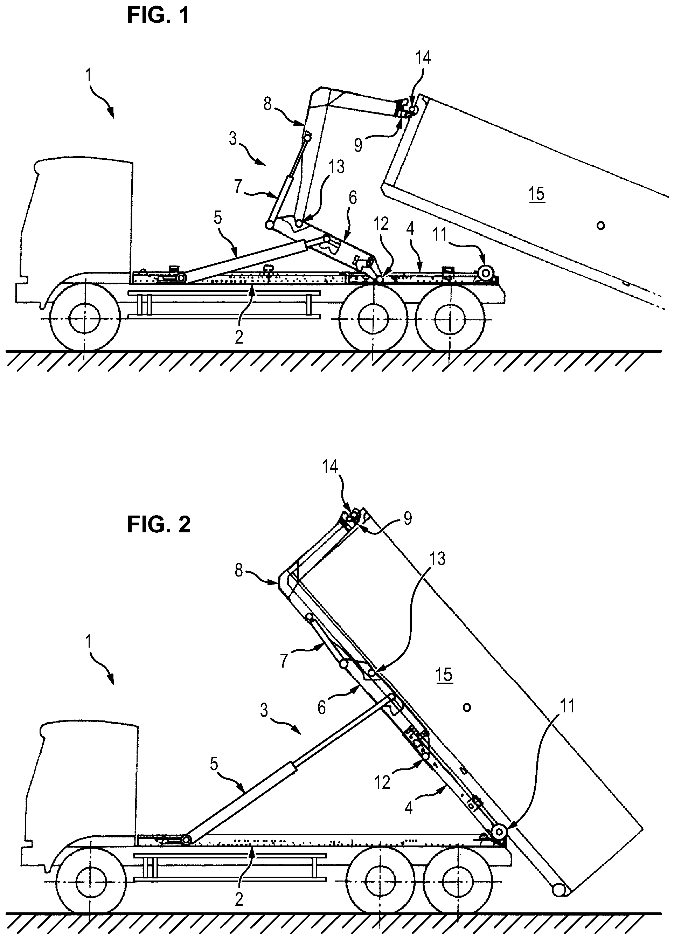

Sur les figures 1 et 2, le véhicule 1 représenté comprend un châssis 2 et un bras de levage 3 fixé au châssis 2.

Dans l'exemple illustré sur les figures 1 et 2, le bras de levage 3 comprend un basculeur 4, un premier vérin 5, une bielle 6, un deuxième vérin 7, une potence 8 et un crochet 9.

Le basculeur 4 est monté pivotant sur le châssis 2 par le biais d'une première liaison pivot 11.

La bielle 6 est montée pivotante sur le basculeur 4 par le biais d'une deuxième liaison pivot 12. Le premier vérin 5 présente une extrémité reliée au châssis 2 et une autre extrémité reliée à la bielle 6. Le premier vérin 5 permet de commander la rotation de la bielle 6 par rapport au basculeur 4 lorsque le basculeur 4 est verrouillé au châssis 2 (configuration illustrée sur la figure 1) ou de commander la rotation du basculeur 4 par rapport au châssis 2 lorsque la bielle 6 est verrouillée en position par rapport au basculeur 4 (configuration de la figure 2).

La potence 8 est montée pivotante sur la bielle 6 par le biais d'une troisième liaison pivot 13. Le deuxième vérin 7 permet de commander la rotation de la potence 8 par rapport à la bielle 6.

Le crochet 9 est propre à s'engager dans un anneau 14 d'un conteneur mobile 15 afin de pouvoir charger le conteneur mobile 15 sur le véhicule 1 et décharger le conteneur mobile 15 du véhicule 1 (figure 1), ou encore afin de pouvoir faire basculer le conteneur mobile 15 pour le vider (figure 2).

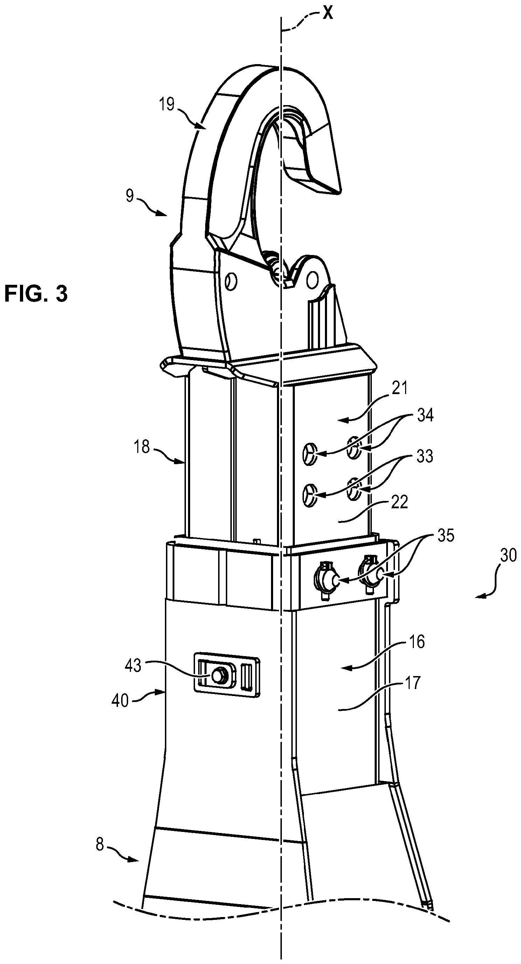

Comme illustré plus précisément sur la figure 3, le crochet 9 est monté coulissant sur la potence 8 selon une direction longitudinale X, de manière à pouvoir ajuster la position du crochet 9 par rapport à la potence 8 en fonction du type de conteneur mobile 15 devant être chargé sur le véhicule 1.

Dans l'exemple illustré sur les figures 3 à 6, la potence 8 comprend un premier profilé creux 16 présentant des parois latérales 17 délimitant une cavité interne.

Le crochet 9 comprend un corps 18 et une partie recourbée 19.

La partie recourbée 19 est propre à s'engager dans un anneau d'un conteneur. Le corps 18 est propre à être inséré dans la potence 8 afin de fixer le crochet 9 à la potence 8.

A cet effet, le corps 18 peut comprendre un deuxième profilé creux 21 présentant des parois latérales 22. Le deuxième profilé 21 est propre à être inséré dans le premier profilé creux 16 de la potence selon la direction longitudinale X de coulissement. Les profilés 16 et 21 sont dimensionnés de tel sorte que le deuxième profilé 21 s'emboite dans le premier profilé 16, tout en étant apte à coulisser par rapport au premier profilé 16. Autrement dit, le crochet 9 et la potence 8 forment un système téléscopique.

Comme illustré sur les figures 3 à 6, le bras 3 comprend également un dispositif de verrouillage 30 permettant de verrouiller le crochet 9 dans une position fixe par rapport à la potence 8.

Plus précisément, dans l'exemple illustré sur les figures, le dispositif de verrouillage 30 permet de verrouiller le crochet 9 par rapport à la potence 8 sélectivement dans trois positions distinctes prédéfinies. Toutefois, il serait possible de concevoir un dispositif de verrouillage 30 permettant de verrouiller le crochet 9 sélectivement dans deux positions distinctes seulement, ou dans un nombre de positions distinctes supérieur à trois.

A cet effet, le dispositif de verrouillage 30 comprend d'une part des premiers orifices 31 ménagés dans la potence 8, et d'autre part des deuxièmes orifices 32, des troisièmes orifices 33 et des quatrièmes orifices 34 ménagés dans le crochet 9. Le dispositif de verrouillage 30 comprend en outre des goupilles 35 et des pions de blocage 36.

Les premiers orifices 31 sont par exemple des orifices circulaires. Dans l'exemple illustré sur les figures, les premiers orifices 31 sont au nombre de quatre. Les premiers orifices 31 sont ménagés deux à deux dans des parois latérales 17 opposées du premier profilé 16. Les premiers orifices 31 présentent chacun un axe s'étendant selon une direction transversale, c'est-à-dire orthogonale, à la direction longitudinale X de coulissement.

Dans l'exemple illustré sur les figures, les deuxièmes orifices 32, les troisièmes orifices 33 et les quatrièmes orifices 34 sont également des orifices circulaires. Dans l'exemple illustré sur les figures, les deuxièmes orifices 32 sont au nombre de quatre, les troisièmes orifices 33 sont au nombre de quatre et les quatrièmes orifices 34 sont au nombre de quatre. Les deuxièmes orifices 32, les troisièmes orifices 33 et les quatrièmes orifices 34 sont ménagés deux à deux dans des parois latérales 22 opposées du deuxième profilé 21. Les deuxièmes orifices 32, les troisièmes orifices 33 et les quatrièmes orifices 34 présentent chacun un axe s'étendant selon une direction transversale, c'est-à-dire orthogonale, à la direction longitudinale X de coulissement.

Les deuxièmes orifices 32, les troisièmes orifices 33 et les quatrièmes orifices 34 sont agencés en des positions différentes les uns des autres (ou à des hauteurs différentes) le long de l'axe longitudinal X de coulissement.

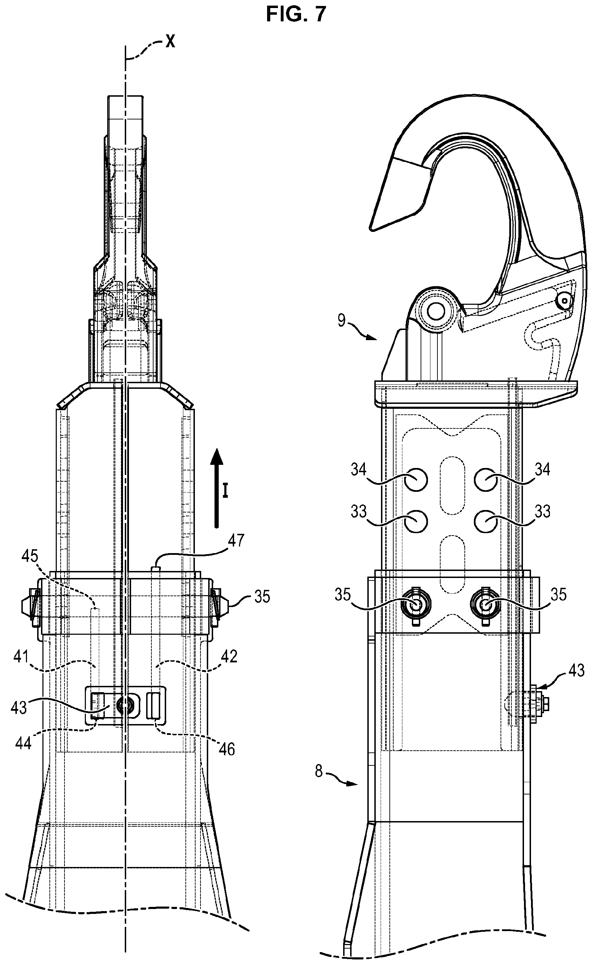

Lorsque le crochet 9 se trouve dans une première position prédéfinie par rapport à la potence 8 (première position illustrée sur la figure 7), les deuxièmes orifices 32 se trouvent en regard des premiers orifices 31. Autrement dit, les premiers orifices 31 coïncident avec les deuxième orifices 32. Dans cette position, les goupilles 35 peuvent être insérées à la fois dans les premiers orifices 31 et les deuxièmes orifices 32 afin de bloquer le crochet 9 dans la première position par rapport à la potence 8.

Dans l'exemple illustré sur les figures, le dispositif de verrouillage comprend deux goupilles 35.

Lorsque le crochet 9 est dans la première position illustrée sur la figure 7, chaque goupille 35 est insérée à travers deux premiers orifices 31 de la potence 8 et deux deuxièmes orifices 32 du crochet 9.

De cette manière, les goupilles 35 immobilisent le crochet 9 par rapport à la potence 8 dans la première position, en empêchant le coulissement du crochet 9 par rapport à la potence 8.

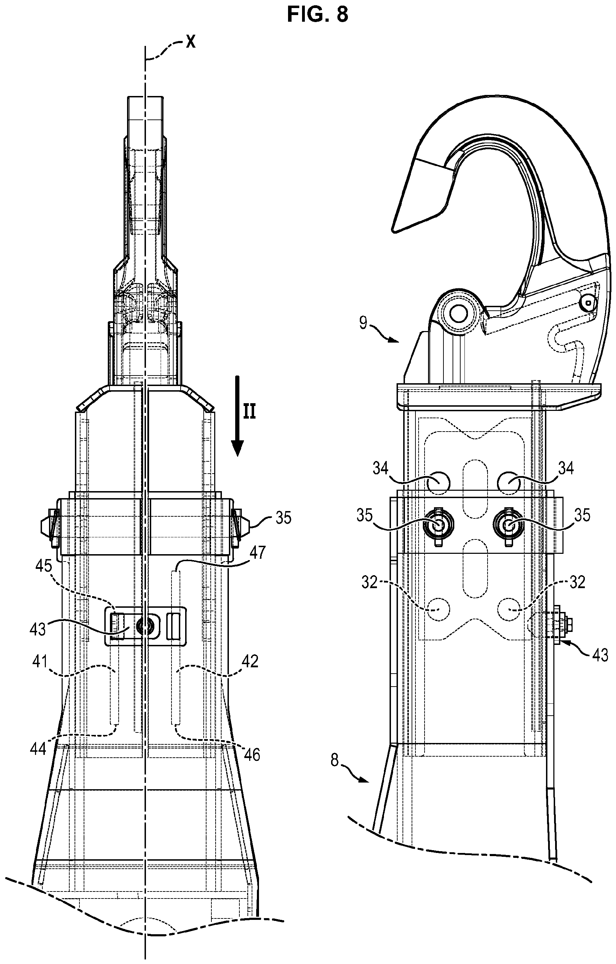

Lorsque le crochet 9 se trouve dans une deuxième position prédéfinie par rapport à la potence 8 (deuxième position illustrée sur la figure 8), les troisièmes orifices 33 se trouvent en regard des premiers orifices 31. Autrement dit, les premiers orifices 31 coïncident avec les troisièmes orifices 33. Les goupilles 35 peuvent être insérées à la fois dans les premiers orifices 31 et les troisièmes orifices 33 afin de bloquer le crochet 9 dans la deuxième position par rapport à la potence 8.

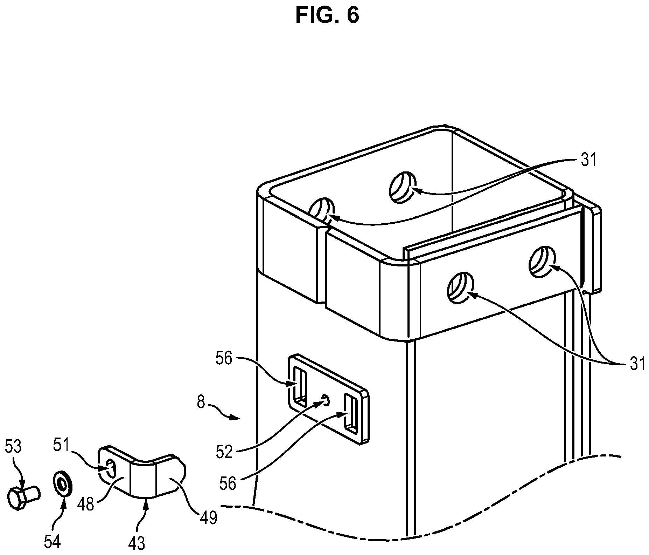

Lorsque le crochet 9 est dans la deuxième position illustrée sur la figure 6, chaque goupille 35 est insérée à travers deux premiers orifices 31 de la potence 8 et deux troisièmes orifices du crochet 9.

De cette manière, les goupilles 35 immobilisent le crochet 9 par rapport à la potence 8 dans la deuxième position, en empêchant le coulissement du crochet 9 par rapport à la potence 8.

Lorsque le crochet 9 se trouve dans une troisième position prédéfinie par rapport à la potence 8 (troisième position illustrée sur la figure 8), les quatrièmes orifices 34 se trouvent en regard des premiers orifices 31. Autrement dit, les premiers orifices 31 coïncident avec les quatrièmes orifices 34. Les goupilles 35 peuvent être insérées à la fois dans les premiers orifices 31 et les quatrièmes orifices 34 afin de bloquer le crochet 9 dans la troisième position par rapport à la potence 8.

Lorsque le crochet 9 est dans la troisième position illustrée sur la figure 7, chaque goupille 35 est insérée à travers deux premiers orifices 31 de la potence 8 et deux quatrièmes orifices 34 du crochet 8.

De cette manière, les goupilles 35 immobilisent le crochet 9 par rapport à la potence 8 dans la troisième position, en empêchant le coulissement du crochet 9 par rapport à la potence 8.

Chaque goupille 35 présente à proximité de chacune de ses extrémités un orifice transversal. Chaque orifice transversal est prévu pour recevoir un pion de blocage 36.

Dans l'exemple illustré sur les figures, le dispositif de verrouillage comprend quatre pions de blocage 36, c'est-à-dire deux pions de blocage 36 par goupille 35.

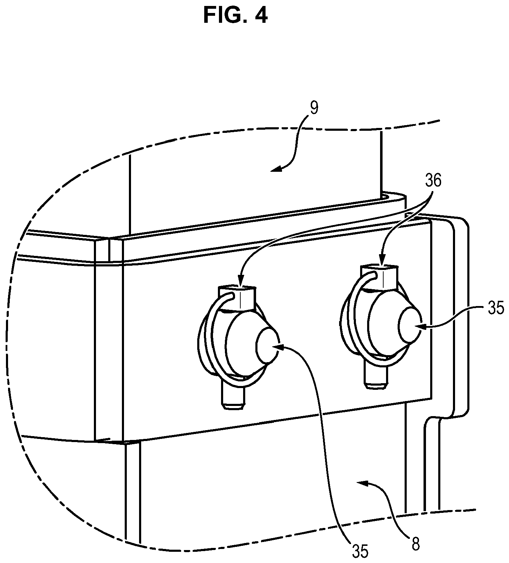

Comme illustré sur la figure 4, une fois insérés dans les orifices des goupilles 35, les pions de blocage 36 empêchent que les goupilles 35 ne puissent sortir des orifices de la potence 8 et du crochet 9. Les pions de blocage 36 empêchent un déverrouillage involontaire du crochet 9.

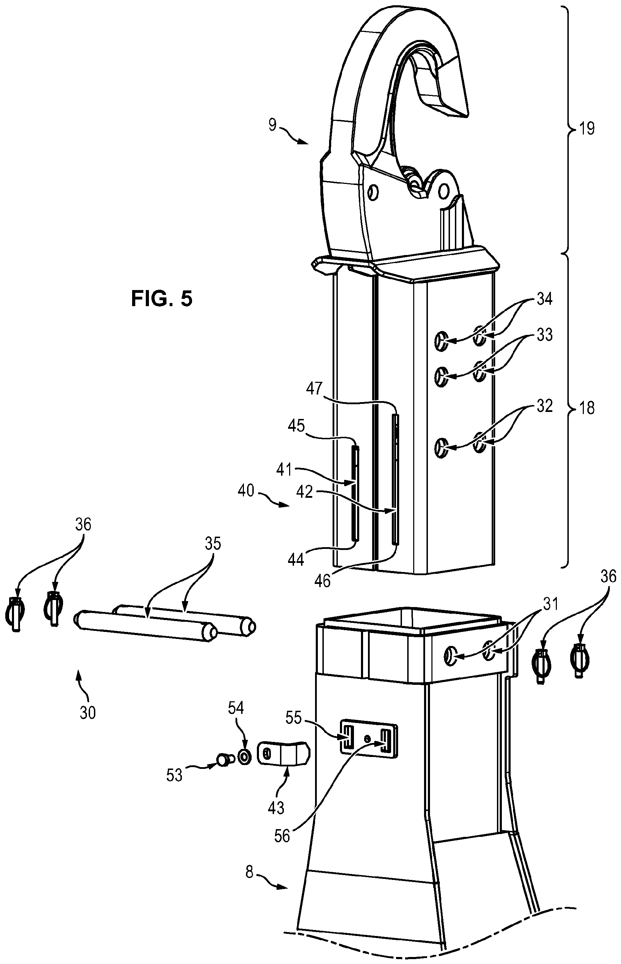

Par ailleurs, comme illustré sur les figures 5 et 6, le bras de levage 3 comprend également un dispositif de positionnement 40 permettant de positionner correctement le crochet 9 par rapport à la potence 8 afin de faciliter le verrouillage du crochet 9 sur la potence 8.

Dans l'exemple illustré sur les figures 4 et 5, le dispositif de positionnement 40 comprend plusieurs fentes 41, 42 et un coulisseau 43.

Les fentes 41 et 42 sont distinctes des orifices 32 à 34.

Le coulisseau 43 est distinct des goupilles 35.

Plus précisément, le dispositif de positionnement 40 comprend une première fente 41 et une deuxième fente 42. Toutefois, il serait possible de concevoir un dispositif de positionnement 40 comprenant une seule fente ou comprenant un nombre de fentes supérieur à deux.

Dans l'exemple illustré sur les figures 4 et 5, les fentes 41 et 42 sont ménagées dans une paroi latérale 22 du deuxième profilé 21, distincte des parois latérales 22 dans lesquelles sont ménagés les orifices 32 à 34. Plus précisément, les fentes 41 et 42 sont ménagées dans une paroi latérale 22 du deuxième profilé 21, s'étendant transversalement par rapport aux parois latérales 22 dans lesquelles sont ménagés les orifices 32 à 34. Les fentes 41 et 42 sont rectilignes. Les fentes 41 et 42 sont disposées côté à côte. Les fentes 41 et 42 sont parallèles entre elles. Chaque fente 41, 42 s'étend parallèlement à la direction longitudinale X de coulissement.

La première fente 41 présente une première extrémité 44, et une deuxième extrémité 45, opposée à la première extrémité 44.

De même, la deuxième fente 42 présente une première extrémité 46 et une deuxième extrémité 47, opposée à la première extrémité 46.

Dans cet exemple, la première fente 41 et la deuxième fente 42 présentent des longueurs différentes, de sorte que leurs deuxièmes extrémités 45 et 47 se trouvent à des hauteurs différentes le long l'axe longitudinal X. En revanche, leurs premières extrémités 44 et 46 se trouvent à des hauteurs identiques le long de l'axe longitudinal X. Toutefois, il serait possible de concevoir un dispositif de positionnement 40 dans lequel les premières extrémités des fentes se trouvent à des hauteurs différentes le long de l'axe longitudinal X, afin d'augmenter le nombre de positions prédéfinies du crochet 9 par rapport à la potence 8.

Le coulisseau 43 est propre à être fixé sur la potence 8.

Plus précisément, dans l'exemple illustré sur les figures 5 et 6le coulisseau 43 est propre à être fixé sur une paroi latérale 17 du premier profilé 16 de la potence 8.

Dans l'exemple illustré sur les figures 5 et 6, le coulisseau 43 est une pièce en forme d'équerre ou en forme de L. Le coulisseau 43 comprend une première patte 48 propre à être fixée sur la paroi latérale 17 du profilé 16 et une deuxième patte 49, s'étendant perpendiculairement à la première patte 48, et propre à être insérée au choix dans l'une ou l'autre des fentes 41 et 42.

La première patte 48 du coulisseau 43 présente un orifice de fixation 51 et la paroi latérale 17 du profilé 16 présente un orifice de fixation 52. Le dispositif de positionnement 40 comprend une vis 53 et une rondelle 54. La vis 53 est propre à être insérée dans les orifices de fixation 51 et 52 pour fixer le coulisseau 43 sur la paroi latérale 17 du profilé 16 de la potence 8.

De plus, la paroi latérale 17 du profilé 16 de la potence 8 présente une première ouverture 55 et une deuxième ouverture 56. La première ouverture 55 est agencée pour permettre l'insertion de la deuxième patte 49 du coulisseau 43 à travers la paroi latérale 17 du profilé 16 dans la première fente 41. La deuxième ouverture 56 est agencée pour permettre l'insertion de la deuxième patte 49 du coulisseau 43 à travers la paroi latérale 17 du profilé 16 dans la deuxième fente 42.

Ainsi, il est possible de fixer le coulisseau 43 sur la potence 8 de manière à ce que le coulisseau 43 soit reçu sélectivement dans la première fente 41 ou dans la deuxième fente 42, en fonction des besoins. A cet effet, il suffit de positionner le coulisseau, soit dans une première position, dans laquelle la deuxième patte 49 s'étend à travers la première ouverture 55, soit dans une deuxième position, dans laquelle la deuxième patte 49 s'étend à travers la deuxième ouverture 56. Pour passer de la première position à la deuxième position, le coulisseau 43 est simplement tourné de 180 degrés par rapport à l'axe de l'orifice 51.

Une fois le coulisseau 43 fixé sur la potence 8, dans la position désirée, le coulisseau 43 coulisse dans l'une ou l'autre des fentes 41, 42 lorsque le crochet 9 coulisse par rapport à la potence 9.

Sur les figures 3, 7 et 8, le coulisseau 43 est fixé sur la potence 8 de sorte qu'il s'étend à travers la première fente 41.

Dans cette configuration, le coulisseau 43 est apte à coulisser dans la première fente 41 lorsque le crochet 9 coulisse par rapport à la potence 8 parallèlement à la direction longitudinale X de coulissement.

Lors de son déplacement dans la première fente 41, le coulisseau 43 est propre à venir en butée sélectivement contre la première extrémité 44 de la première fente 41, comme illustré sur la figure 7, ou contre la deuxième extrémité 45 de la première fente 41, comme illustré sur la figure 8.

Lorsque le coulisseau 43 est en butée contre la première extrémité 44 de la première fente 41 (figure 7), le coulisseau 43 empêche un coulissement du crochet 9 par rapport à la potence 9 dans un premier sens de coulissement (flèche I) au-delà de la première position prédéfinie par rapport à la potence 8. Le premier sens de coulissement est le sens de coulissement du coulisseau lorsque celui-ci parcourt la première fente 41 en allant de la deuxième extrémité 45 à la première extrémité 44 de la première fente 41.

Lorsque le coulisseau 43 est en butée contre la deuxième extrémité 45 de la première fente 41 (figure 8), le coulisseau 43 empêche un coulissement du crochet 9 par rapport à la potence 9 dans un deuxième sens de coulissement (flèche II) au-delà de la deuxième position prédéfinie par rapport à la potence. Le deuxième sens de coulissement est le sens de coulissement du coulisseau lorsque celui-ci parcourt la première fente 41 en allant de la première extrémité 44 à la deuxième extrémité 45 de la première fente 41. Autrement dit, le deuxième sens de coulissement est opposé au premier sens de coulissement.

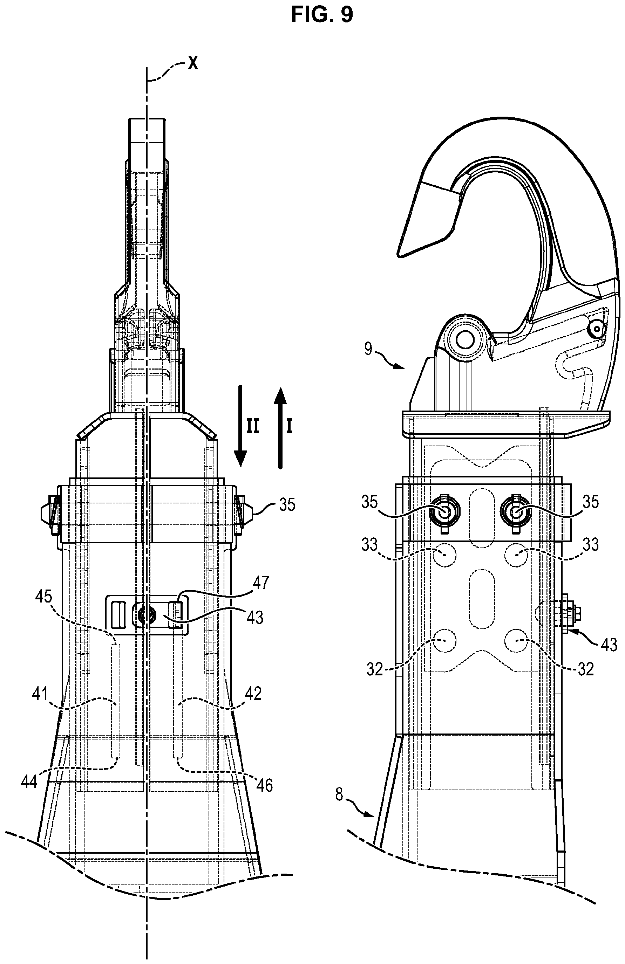

Sur la figure 9, le coulisseau 43 est fixé sur la potence 8 de sorte qu'il s'étend à travers la deuxième fente 42.

Dans cette configuration, le coulisseau 43 est apte à coulisser dans la deuxième fente 42 lorsque le crochet 9 coulisse par rapport à la potence 8 parallèlement à la direction longitudinale X de coulissement.

Le coulisseau 43 est propre à venir en butée sélectivement contre la première extrémité 46 de la deuxième fente 42, ou contre la deuxième extrémité 47 de la deuxième fente 42, comme illustré sur la figure 9.

Lorsque le coulisseau 43 est en butée contre la première extrémité 46 de la deuxième fente 42, le coulisseau 43 empêche un coulissement du crochet 9 par rapport à la potence 8 dans le premier sens de coulissement (flèche I) au-delà de la première position prédéfinie par rapport à la potence 8.

Lorsque le coulisseau 43 est en butée contre la deuxième extrémité 47 de la deuxième fente 42 (figure 9), le coulisseau 43 empêche un coulissement du crochet 9 par rapport à la potence 8 dans le deuxième sens de coulissement (flèche II) au-delà de la troisième position prédéfinie par rapport à la potence 8.

En utilisation, lorsque le crochet 9 se trouve dans la première position, telle qu'illustrée sur la figure 7, et qu'un opérateur souhaite modifier la position du crochet 9 pour que le crochet 9 se trouve dans la deuxième position, telle qu'illustrée sur la figure 8, l'opérateur procède selon les étapes suivantes.

Selon une première étape, l'opérateur commande le bras de levage 3 de manière à orienter le crochet 9 vers le haut (c'est-à-dire que la partie arquée 19 du crochet 9 se trouve au-dessus du corps 18 du crochet 9 par rapport à la verticale).

Selon une deuxième étape, l'opérateur déverrouille le crochet 9. A cet effet, l'opérateur retire les pions de blocage 36 des goupilles 35 puis il retire les goupilles 35 des orifices 31, 32.

Sous l'effet de la gravité, le crochet 9 coulisse par rapport à la potence 8 selon la direction longitudinale X, dans le deuxième sens (flèche II).

Simultanément, le coulisseau 43 coulisse dans la première fente 41 jusqu'à ce que le coulisseau 43 arrive en butée contre la deuxième extrémité 45 de la première fente 41. Lorsque le coulisseau 43 se trouve en butée contre la deuxième extrémité 45, le crochet 9 se trouve dans la deuxième position et le coulisseau 43 empêche le coulissement du crochet 9 par rapport à la potence 8 au-delà de la deuxième position.

A cet instant, les premiers orifices 31 se trouvent en regard des troisièmes orifices 33.

Selon une troisième étape, l'opérateur verrouille le crochet 9 dans la potence 8. A cet effet, l'opérateur introduit les goupilles 35 dans les premiers orifices 31 et dans les troisièmes orifices 33. Puis, il introduit les pions de blocage 36 dans les orifices des goupilles 35.

Le crochet 9 se trouve ainsi verrouillé dans la deuxième position par rapport à la potence 8.

A l'inverse, lorsque le crochet 9 se trouve dans la deuxième position, telle qu'illustrée sur la figure 8, et qu'un opérateur souhaite modifier la position du crochet 9 pour que le crochet 9 se trouve dans la première position, telle qu'illustrée sur la figure 7, l'opérateur procède selon les étapes suivantes.

Selon une première étape, l'opérateur commande le bras de levage 3 de manière à orienter le crochet 9 vers le bas (c'est-à-dire que la partie arquée 19 du crochet 9 se trouve au-dessous du corps 18 du crochet 9 par rapport à la verticale).

Selon une deuxième étape, l'opérateur déverrouille le crochet 9. A cet effet, l'opérateur retire les pions de blocage 36 des goupilles 35 puis il retire les goupilles 35 des orifices 31, 33.

Sous l'effet de la gravité, le crochet 9 coulisse par rapport à la potence 8 selon la direction longitudinale X, dans le premier sens (flèche I).

Simultanément, le coulisseau 43 coulisse dans la première fente 41 jusqu'à ce que le coulisseau 43 arrive en butée contre la première extrémité 44 de la première fente 41. Lorsque le coulisseau 43 se trouve en butée contre la première extrémité 44, le crochet 9 se trouve dans la première position et le coulisseau 43 empêche le coulissement du crochet 9 par rapport à la potence 8 au-delà de la première position.

A cet instant, les premiers orifices 31 se trouvent en regard des deuxièmes orifices 32.

Selon une troisième étape, l'opérateur verrouille le crochet 9 dans la potence 8. A cet effet, l'opérateur introduit les goupilles 35 dans les premiers orifices 31 et dans les deuxièmes orifices 32. Puis, il introduit les pions de blocage 36 dans les orifices des goupilles 35.

Le crochet 9 se trouve ainsi verrouillé dans la première position.

Les mêmes étapes peuvent être exécutées lorsque le coulisseau 43 se trouve dans la deuxième fente 42. Dans ce cas, les étapes qui précèdent permettent à l'opérateur de faire passer le crochet 9 de la première position à la troisième position, telle qu'illustrée sur la figure 9, et inversement.

## Revendications

1. Bras de levage (3) comprenant :
- une potence (8),
- un crochet (9) propre à être engagé dans un anneau (14) d'un conteneur (15), le crochet (9) étant monté coulissant par rapport à la potence (8),
- un dispositif de positionnement (40) comprenant une fente (41) et un coulisseau (43), la fente (41) étant ménagée dans l'un du crochet (9) et de la potence (8), et le coulisseau (43) étant propre à être fixé sur l'autre du crochet (9) et de la potence (8) de sorte que le coulisseau (43) coulisse dans la fente (41) lorsque le crochet (9) coulisse par rapport à la potence (8),
dans lequel la fente (41) présente une première extrémité (44) et une deuxième extrémité (45), le coulisseau (43) étant propre à venir en butée sélectivement contre la première extrémité (44) de la fente (41) de sorte à empêcher un coulissement du crochet (9) par rapport à la potence (8) dans un premier sens de coulissement (I) au-delà d'une première position prédéfinie du crochet (8) par rapport à la potence (9), et contre la deuxième extrémité (45) de la fente (41) de sorte à empêcher un coulissement du crochet (9) par rapport à la potence (8) dans un deuxième sens de coulissement (II) au-delà d'une deuxième position prédéfinie du crochet (9) par rapport à la potence (8),
le bras de levage étant **caractérisé en ce que** l'un du crochet (9) et de la potence (8) présente un premier orifice de fixation (31) et l'autre du crochet (9) et de la potence (8) présente un deuxième orifice de fixation (32) et un troisième orifice de fixation (33), le premier orifice de fixation (31), le deuxième orifice de fixation (32) et le troisième orifice de fixation (33) étant agencés de sorte que :
- lorsque le crochet (9) est dans la première position prédéfinie, le premier orifice de fixation (31) se trouve en regard du deuxième orifice de fixation (32), autorisant l'insertion d'une goupille de fixation (35) à travers le premier orifice de fixation (31) et le deuxième orifice de fixation (32) pour bloquer le crochet (9) dans la première position, et
- lorsque le crochet (9) est dans la deuxième position prédéfinie, le premier orifice de fixation (31) se trouve en regard du troisième orifice de fixation (33), autorisant l'insertion de la goupille de fixation (35) à travers le premier orifice de fixation (31) et le troisième orifice de fixation (33), pour bloquer le crochet (9) dans la deuxième position.

2. Bras de levage (3) selon la revendication 1, dans lequel le dispositif de positionnement (40) comprend une autre fente (42) ménagée dans l'un du crochet (9) et de la potence (8), et le coulisseau (43) est propre à être fixé sur l'autre du crochet (9) et de la potence (8), de sorte que le coulisseau (43) coulisse dans l'autre fente (42) lorsque le crochet (9) coulisse par rapport à la potence (8), et dans lequel l'autre fente (42) présente une première extrémité (46) et une deuxième extrémité (47), le coulisseau (43) étant propre à venir en butée sélectivement contre la première extrémité (46) de l'autre fente (42) de sorte à empêcher un coulissement du crochet (9) par rapport à la potence (8) dans le premier sens de coulissement (I) au-delà d'une troisième position prédéfinie du crochet (9) par rapport à la potence (8), ou contre la deuxième extrémité (47) de l'autre fente (42) de sorte à empêcher un coulissement du crochet par rapport à la potence dans le deuxième sens de coulissement (II) au-delà d'une quatrième position prédéfinie du crochet (9) par rapport à la potence (8).

3. Bras de levage (3) selon la revendication 2, dans lequel la troisième position prédéfinie est différente de la première position prédéfinie et/ou la quatrième position prédéfinie est différente de la deuxième position prédéfinie.

4. Bras de levage (3) selon l'une des revendications 2 et 3, dans lequel le coulisseau (43) comprend une pièce en forme d'équerre comprenant une première portion (48) propre à être fixée au moyen d'une vis de fixation (53) sur l'un du crochet (9) et de la potence (8), et une deuxième portion (49) s'étendant à travers l'une ou l'autre des fentes (41, 42) lorsque la première portion (48) est fixée sur l'un du crochet (9) et de la potence (8).

5. Bras de levage (3) selon l'une des revendications 2 à 4, dans lequel l'un du crochet (9) et de la potence (8) présente un quatrième orifice de fixation (34), le quatrième orifice de fixation (34) étant agencé de sorte que lorsque le crochet (9) est dans la troisième position prédéfinie, le premier orifice de fixation (31), le deuxième orifice de fixation (32) ou le troisième orifice de fixation (33) se trouve en regard du quatrième orifice de fixation (34), autorisant l'insertion d'une goupille de fixation (35) à travers le premier orifice de fixation (31), le deuxième orifice de fixation (32) ou le troisième orifice de fixation (33) et le quatrième orifice de fixation (34), pour bloquer le crochet (9) dans la troisième position.

6. Véhicule (1) comprenant un châssis (2) et un bras de levage (3) fixé au châssis (2), conforme à l'une des revendications 1 à 5.

## Patentansprüche

1. Hubarm (3), umfassend:
- einen Ausleger (8),
- einen Haken (9), der geeignet ist, in einen Ring (14) eines Behälters (15) einzugreifen, wobei der Haken (9) in Bezug auf den Ausleger (8) gleitend angebracht ist,
- eine Positionierungsvorrichtung (40), die einen Schlitz (41) und einen Schieber (43) umfasst, wobei der Schlitz (41) in einem von dem Haken (9) und dem Ausleger (8) ausgebildet ist und der Schieber (43) geeignet ist, an dem anderen von dem Haken (9) und dem Ausleger (8) befestigt zu sein, so dass der Schieber (43) in dem Schlitz (41) gleitet, wenn der Haken (9) in Bezug auf den Ausleger (8) gleitet,
wobei der Schlitz (41) ein erstes Ende (44) und ein zweites Ende (45) aufweist, wobei der Schieber (43) geeignet ist, selektiv gegen das erste Ende (44) des Schlitzes (41) in Anschlag zu kommen, so dass ein Gleiten des Hakens (9) in Bezug auf den Ausleger (8) in einer ersten Gleitrichtung (I) über eine erste vordefinierte Position des Hakens (8) in Bezug auf den Ausleger (9) hinaus verhindert wird, und gegen das zweite Ende (45) des Schlitzes (41), so dass ein Gleiten des Hakens (9) in Bezug auf den Ausleger (8) in einer zweiten Gleitrichtung (II) über eine zweite vordefinierte Position des Hakens (9) in Bezug auf den Ausleger (8) hinaus verhindert wird,
wobei der Hubarm **dadurch gekennzeichnet ist, dass** einer von dem Haken (9) und dem Ausleger (8) eine erste Befestigungsöffnung (31) aufweist und der andere von dem Haken (9) und dem Ausleger (8) eine zweite Befestigungsöffnung (32) und eine dritte Befestigungsöffnung (33) aufweist, wobei die erste Befestigungsöffnung (31), die zweite Befestigungsöffnung (32) und die dritte Befestigungsöffnung (33) derart eingerichtet sind, dass:
- wenn sich der Haken (9) in der ersten vordefinierten Position befindet, die erste Befestigungsöffnung (31) der zweiten Befestigungsöffnung (32) zugewandt ist, was das Einführen eines Befestigungsstifts (35) durch die erste Befestigungsöffnung (31) und die zweite Befestigungsöffnung (32) gestattet, um den Haken (9) in der ersten Position zu arretieren, und
- wenn sich der Haken (9) in der zweiten vordefinierten Position befindet, die erste Befestigungsöffnung (31) der dritten Befestigungsöffnung (33) zugewandt ist, was das Einführen des Befestigungsstifts (35) durch die erste Befestigungsöffnung (31) und die dritte Befestigungsöffnung (33) gestattet, um den Haken (9) in der zweiten Position zu arretieren.

2. Hubarm (3) nach Anspruch 1, wobei die Positionierungsvorrichtung (40) einen weiteren Schlitz (42) umfasst, der in einem von dem Haken (9) und dem Ausleger (8) ausgebildet ist und der Schieber (43) geeignet ist, an dem anderen von dem Haken (9) und dem Ausleger (8) befestigt zu sein, so dass der Schieber (43) in dem anderen Schlitz (42) gleitet, wenn der Haken (9) in Bezug auf den Ausleger (8) gleitet, und wobei der andere Schlitz (42) ein erstes Ende (46) und ein zweites Ende (47) aufweist, wobei der Schieber (43) geeignet ist, selektiv gegen das erste Ende (46) des anderen Schlitzes (42) in Anschlag zu kommen, um ein Gleiten des Hakens (9) in Bezug auf den Ausleger (8) in der ersten Gleitrichtung (I) über eine dritte vordefinierte Position des Hakens (9) in Bezug auf den Ausleger (8) hinaus zu verhindern, oder gegen das zweite Ende (47) des anderen Schlitzes (42), so dass ein Gleiten des Hakens in Bezug auf den Ausleger in der zweiten Gleitrichtung (II) über eine vierte vordefinierte Position des Hakens (9) in Bezug auf den Ausleger (8) hinaus verhindert wird.

3. Hubarm (3) nach Anspruch 2, wobei die dritte vordefinierte Position von der ersten vordefinierten Position verschieden ist und/oder die vierte vordefinierte Position von der zweiten vordefinierten Position verschieden ist.

4. Hubarm (3) nach einem Ansprüche 2 und 3, wobei der Schieber (43) ein winkelförmiges Teil umfasst, das einen ersten Abschnitt (48) umfasst, der geeignet ist, mittels einer Befestigungsschraube (53) an einem von dem Haken (9) und dem Ausleger (8) befestigt zu sein, und einen zweiten Abschnitt (49), der sich durch den einen oder den anderen der Schlitze (41, 42) erstreckt, wenn der erste Abschnitt (48) an einem von dem Haken (9) und dem Ausleger (8) befestigt ist.

5. Hubarm (3) nach einem der Ansprüche 2 bis 4, wobei einer von dem Haken (9) und dem Ausleger (8) eine vierte Befestigungsöffnung (34) aufweist, wobei die vierte Befestigungsöffnung (34) derart eingerichtet ist, dass, wenn sich der Haken (9) in der dritten vordefinierten Position befindet, die erste Befestigungsöffnung (31), die zweite Befestigungsöffnung (32) oder die dritte Befestigungsöffnung (33) der vierten Befestigungsöffnung (34) zugewandt ist, was das Einführen eines Befestigungsstifts (35) durch die erste Befestigungsöffnung (31), die zweite Befestigungsöffnung (32) oder die dritte Befestigungsöffnung (33) und die vierte Befestigungsöffnung (34) gestattet, um den Haken (9) in der dritten Position zu arretieren.

6. Fahrzeug (1) mit einem Fahrgestell (2) und einem am Fahrgestell (2) befestigten Hubarm (3) nach einem der Ansprüche 1 bis 5.

## Claims

1. A hooklift (3) comprising:
- a jib (8),
- a hook (9) capable of being engaged in a ring (14) of a container (15), the hook (9) being slidably mounted relative to the jib (8),
- a positioning device (40) comprising a slot (41) and a slider (43), the slot (41) being arranged in one of the hook (9) and of the jib (8), and the slider (43) being capable of being fastened onto the other of the hook (9) and of the jib (8) so that the slider (43) slides in the slot (41) when the hook (9) slides relative to the jib (8),
wherein the slot (41) has a first end (44) and a second end (45), the slider (43) being capable of abutting selectively against the first end (44) of the slot (41) so as to prevent a sliding of the hook (9) relative to the jib (8) in a first sliding direction (I) beyond a first predefined position of the hook (8) relative to the jib (9), and against the second end (45) of the slot (41) so as to prevent a sliding of the hook (9) relative to the jib (8) in a second sliding direction (II) beyond a second predefined position of the hook (9) relative to the jib (8),
the hooklift being **characterised in that** one of the hook (9) and of the jib (8) has a first fastening hole (31) and the other of the hook (9) and of the jib (8) has a second fastening hole (32) and a third fastening hole (33), the first fastening hole (31), the second fastening hole (32) and the third fastening hole (33) being arranged so that:
- when the hook (9) is in the first predefined position, the first fastening hole (31) is located opposite the second fastening hole (32), enabling the insertion of a fastening pin (35) through the first fastening hole (31) and the second fastening hole (32), to block the hook (9) in the first position, and
- when the hook (9) is in the second predefined position, the first fastening hole (31) is located opposite the third fastening hole (33), enabling the insertion of the fastening pin (35) through the first fastening hole (31) and the third fastening hole (33), to block the hook (9) in the second position.

2. The hooklift (3) according to claim 1, wherein the positioning device (40) comprises another slot (42) arranged in one of the hook (9) and of the jib (8), and the slider (43) is capable of being fastened onto the other of the hook (9) and of the jib (8), so that the slider (43) slides in the other slot (42) when the hook (9) slides relative to the jib (8), and wherein the other slot (42) has a first end (46) and a second end (47), the slider (43) being capable of abutting selectively against the first end (46) of the other slot (42) so as to prevent a sliding of the hook (9) relative to the jib (8) in the first sliding direction (I) beyond a third predefined position of the hook (9) relative to the jib (8), or against the second end (47) of the other slot (42) so as to prevent a sliding of the hook relative to the jib in the second sliding direction (II) beyond a fourth predefined position of the hook (9) relative to the jib (8).

3. The hooklift (3) according to claim 2, wherein the third predefined position is different from the first predefined position and/or the fourth predefined position is different from the second predefined position.

4. The hooklift (3) according to any of claims 2 and 3, wherein the slider (43) comprises a bracket-shaped piece comprising a first portion (48) capable of being fastened by means of a fastening screw (53) onto one of the hook (9) and of the jib (8), and a second portion (49) extending through either of the slots (41, 42) when the first portion (48) is fastened onto one of the hook (9) and of the jib (8).

5. The hooklift (3) according to any of claims 2 to 4, wherein one of the hook (9) and of the jib (8) has a fourth fastening hole (34), the fourth fastening hole (34) being arranged so that when the hook (9) is in the third predefined position, the first fastening hole (31), the second fastening hole (32) or the third fastening hole (33) is located opposite the fourth fastening hole (34), enabling the insertion of a fastening pin (35) through the first fastening hole (31), the second fastening hole (32) or the third fastening hole (33) and the fourth fastening hole (34), to block the hook (9) in the third position.

6. A vehicle (1) comprising a frame (2) and a hooklift (3) fastened onto the frame (2), in accordance with any of the claims 1 to 5.
